# EUROPÄISCHE PATENTANMELDUNG

(11) **EP 2 405 281 A1**
(43) Veröffentlichungstag der Anmeldung: **11.01.2012**
(21) Anmeldenummer: 10075298.9
(22) Anmeldetag: 09.07.2010
(51) Int. Cl.: G01S 5/02

(54) **Verfahren und Vorrichtung zur Bestimmung der Position und Orientierung eines mobilen Senders**

(71) Anmelder: Fraunhofer-Gesellschaft zur Förderung der angewandten Forschung, 80686 München (DE); Friedrich-Alexander-Universität Erlangen-Nürnberg, 91054 Erlangen (DE)
(72) Erfinder: Eidloth, Andreas, 91052 Erlangen (DE); Thielecke, Jörn, Prof. Dr., 91056 Erlangen (DE)
(74) Vertreter: Pfenning, Meinig & Partner GbR

(57) **Zusammenfassung**

Es wird ein Verfahren und eine Vorrichtung zur Bestimmung der Position und Orientierung eines mobilen Senders, der mindestens zwei linear polarisierte und mit einem vorgegebenen Winkel zueinander angeordnete Antennen aufweist, vorgeschlagen. Mehrere mit dem mobilen Sender synchronisierbare und bezüglich ihrer Position bekannte Empfänger empfangen dabei über eine zirkular polarisierte Antenne Sendesignale mit vorgegebener Trägerfrequenz. Verfahrensgemäß wird ein feldtheoretisches Modell der Übertragungsstrecke zwischen mobilem Sender und Empfängern erstellt, das Trägerphasenmesswerte definiert, das feldtheoretische Modell in einem Kalman-Filter implementiert und die Empfangssignale bezüglich Trägerphasenmesswerte und/oder Laufzeiten auswertet. Schließlich werden die Position und Orientierung des mobilen Senders in dem Kalman-Filter unter Verwendung des feldtheoretischen Modells und den aus den Empfangssignalen ermittelten Trägerphasenmesswerten und/oder Laufzeiten bestimmt.

## Beschreibung

Die Erfindung betrifft ein Verfahren und eine Vorrichtung zur Bestimmung der Position und Orientierung eines mobilen Senders.

Aus der EP 1 556 713 B1 ist ein Verfahren und eine Vorrichtung zur kontinuierlichen Echtzeitverfolgung der Position von wenigstens einem mobilen Sender bekannt, bei denen mehrere Empfänger eines stationären Empfänger- und Signalverarbeitungsnetzwerks die von dem Sender emittierten Signale empfangen. Aus den Empfangssignalen werden Laufzeiten, sogenannte TOA-Werte (Time Of Arrival), zwischen dem Sender und jeweils den Empfängern bestimmt, wobei bei beispielsweise aus 12 TOA-Werten von 12 feststehenden Empfängern durch Bezug auf einen der Empfänger 11 Laufzeitdifferenzen, sogenannte TDOA-Werte (Time Difference Of Arrival), gebildet werden, aus denen durch hyperbolische Triangulation, die in einem Kalman-Filter implementiert ist, die jeweilige Position des Senders berechnet wird. Dieses Verfahren bzw. diese Vorrichtung wurde beispielsweise zur Echtzeitverfolgung eines Balls und/oder von Spielern auf einem Spielfeld, z.B. einem Fußballfeld, angewandt.

Bei einem solchen bekannten System erzeugt ein rotierender mobiler Sender, der beispielsweise in einem Ball angeordnet ist, verfälschte Trägerphasenmesswerte, die dann das Positionsergebnis für den Sender verfälschen. Diese Störung ist umso größer, je schneller der Ball rotiert. Zurückzuführen ist dieser Effekt auf die Wahl der benutzten Antennen. Der Sender strahlt linear polarisierte Wellen ab, wie dies auch z.B. bei einem linearen Dipol der Fall ist. Auf der Empfängerseite werden zirkular polarisierte Antennen verwendet, wobei durch die Rotation des Balls bzw. des Senders auch die Polarisationsebene rotiert, was sich am Empfänger als eine Verschiebung der Trägerfrequenz bemerkbar macht. Die von der Trägerfrequenz abgeleiteten Messwerte der Trägerphase werden durch diesen Störeffekt verfälscht und stellen somit keine zuverlässige Messgröße für die Entfernung bzw. deren Änderung mehr dar. Wenn die Trägerphasenmesswerte in der Positionsrechnung berücksichtigt werden, resultiert daraus ein mehr oder weniger großer Positionsfehler. Zur Lösung dieses Problems könnte in der Positionsrechnung auf die Trägerphasenmessung bzw. die Trägerphasenmesswerte verzichtet werden, jedoch würde dann das Positionsergebnis deutlich verschlechtert, da nur noch die ungenauere Codephasenmessung der Laufzeiten der Signale verwendet würde.

Der im Zusammenhang mit dem zitierten Stand der Technik auftretende physikalische Effekt ist auch in anderen Systemen, beispielsweise im GPS-System vorhanden, wobei im GPS-System der Fehler dadurch eliminiert wird, dass die Phasendifferenz zwischen den Messwerten zweier Satelliten gebildet wird. Voraussetzung dabei ist, dass die Empfangsantenne nur um die vertikale Achse gedreht wird, was in der Regel der Fall ist. In dem Lokalisierungsverfahren nach dem oben genannten Stand der Technik rotiert der Sender vollständig willkürlich, deshalb ist die beim GPS-System angewandte Kompensation des Fehlers nicht möglich.

Ein weiterer Stand der Technik, in dem der genannte physikalische Effekt zur Orientierungsmessung verwendet wird, ist die US 3 540 045, bei der die Ausrichtung der Polarisationsebene in der Satellitenkommunikation ermittelt und gesteuert werden soll. Hier wird mit einem Kreuzdipol, der rechts- und linkshändig zirkular polarisierte elektromagnetische Feldanteile gleichzeitig empfangen kann, der Winkel der Polarisationsebene eines Satellitensignals gemessen. US 7 123 187 wird zur Bestimmung der Ausrichtung eines GPS-Empfängers verwendet, wobei eine "Standard-GPS-Antennenkonfiguration" verwendet wird, d.h. je eine rechtshändig zirkular polarisierte Antenne an Sender und Empfänger. Dabei werden die beiden Trägerfrequenzen des GPS-Systems verwendet, wobei aus den unterschiedlichen Phasenänderungen bei Drehung, bei der sich beide Phasenmesswerte gleichartig ändern, und Entfernungsänderung, bei der die Phasenänderungen abhängig von der jeweiligen Wellenlänge sind, sich die beiden Anteile bestimmen bzw. separieren lassen.

Der Erfindung liegt die Aufgabe zugrunde, ein Verfahren und eine Vorrichtung zur Bestimmung der Position und der Orientierung eines mobilen Senders zu schaffen, bei denen die Messfehler aufgrund einer willkürlichen Rotation eines mobilen Senders vermieden werden und somit die Bestimmung der Position des Senders verbessert wird.

Diese Aufgabe wird erfindungsgemäß durch die Merkmale des unabhängigen Verfahrensanspruchs und des unabhängigen Vorrichtungsanspruchs gelöst.

Durch die in den Unteransprüchen angegebenen Maßnahmen sind vorteilhafte Weiterbildungen und Verbesserungen möglich.

Dadurch, dass für ein System mit einem mobilen Sender mit mindestens zwei Sendeantennen und mehreren Empfängern mit zirkular polarisierter Antenne ein feldtheoretisches Modell der Übertragungsstrecke zwischen dem mobilen Sender und dem jeweiligen Empfänger erstellt wird, das Trägerphasenmesswerte aus einer bekannten Position und Orientierung des mobilen Senders bestimmt und das feldtheoretische Modell in einem Kalman-Filter implementiert wird, anschließend die Empfangssignale bezüglich der Trägerphasenwerte und/oder der Laufzeiten zur Bestimmung der Distanz zwischen Sender und Empfänger ausgewertet werden und die Position und Orientierung des mobilen Senders in dem Kalman-Filter unter Verwendung des feldtheoretischen Modells und den aus den Empfangssignalen jeweils ermittelten Trägerphasenmesswerten und/oder Laufzeiten bestimmt werden, können erfindungsgemäß Entfernungs- und Orientierungsinformation mit der ein Lokalisierungssystem bildenden Vorrichtung ermittelt und voneinander separiert werden. Dadurch können Positionsfehler bei Rotation des mobilen Senders beseitigt und Orientierungs- und Drehrateninformationen, beispielsweise zur Bestimmung des Spins eines den mobilen Sender tragenden Balls, gewonnen werden und zusätzliche Hardware zur Orientierungsschätzung kann vermieden werden.

Die Einstellung des feldtheoretischen Modells wird für jede Sendeantenne des mobilen Senders, d.h. für die unterschiedlichen Sendeantennenausrichtungen in Bezug auf jeden Empfänger wiederholt.

Durch die Verwendung von zwei Sendeantennen, die zum jeweiligen Empfänger vorzugsweise die gleiche Distanz aufweisen, stehen am Empfänger zwei unabhängige Phasenmesswerte zur Verfügung, deren Unterschied nur von der winkelmäßig unterschiedlichen Ausrichtung der Sendeantennen bestimmt wird. Falls die beiden Sendeantennen einen Distanzunterschied aufweisen, sind mit der Drehung des mobilen Senders auch Distanzunterschiede zu verzeichnen, die sich auf die Phasenmesswerte niederschlagen. Selbstverständlich kann dies bei den Berechnungen berücksichtigt werden.

Das feldtheoretische Modell wird erfindungsgemäß dadurch erstellt, dass ein von einer Sendeantenne erzeugtes elektromagnetisches Feld bestimmt wird, wobei eine bekannte Position und Orientierung dieser Sendeantenne vorgegeben wird, weiterhin wird die von der Sendeantenne erzeugte Feldstärke am Empfänger mit bekannter Position ermittelt und es werden die in der zirkularen Antenne des Empfängers induzierten komplexen Ströme unter Verwendung der Komponenten der Feldstärke in vektorieller Felddarstellung bestimmt, wobei die zirkulare Antenne mittels zweiter linearer Dipole modelliert und schließlich der Phasenwinkel aus den Strömen bzw. aus dem Gesamtsystem als Trägerphasenmesswert ermittelt wird. Diese Beschreibung gilt für eine Sendeantenne in Bezug auf einen Empfänger, für die zweite Sendeantenne in Bezug auf den einen Empfänger gilt das Entsprechende und die Berechnung wird für alle Empfänger wiederholt.

Bei der Bestimmung der induzierten Ströme bzw. des induzierten Gesamtstroms mittels des Modells der zirkularen Antenne aus zwei linearen Dipolen wird eine 90°-Verschiebung eines das Modell komplettierenden Phasenschiebers berücksichtigt.

Das von einer Sendeantenne bei bekannter Position und Orientierung erzeugte elektromagnetische Feld kann einerseits unter Verwendung der Feldgleichungen eines Hertz'schen Dipols oder durch real gemessene Werte der Feldstärkeverteilung der Sendeantennen auf einer Kugel, die in einer Tabelle hinterlegt werden, bestimmt werden.

Erfindungsgemäß werden für die Umrechnung eines Senderkoordinatensystems auf ein Bezugskoordinatensystem Drehmatrizen in Form von Kosinusmatrizen oder Quaternionen verwendet, wobei letztere vorteilhaft in Kalman-Filtern anwendbar sind, da weniger Zustände geschätzt werden müssen, was die Zeit für die Berechnung verkürzt.

Für die notwendige Synchronisation zwischen Sender und Empfänger kann ein weiterer Empfänger bekannter Position, d.h. ein Synchronisations-Empfänger der mit den Empfängern synchronisiert ist, herangezogen werden, wobei die Laufzeit- und/oder Trägerphasendifferenzen der Empfangssignale bezüglich des Senders berechnet werden, oder eine Synchronisation kann durch kontinuierliche Schätzung der Abweichung der im Sender und Empfänger vorhandenen Uhren vorgenommen werden. Schließlich sind auch Atomuhren für Sender und Empfänger verwendbar, die eine hohe Gleichlaufgenauigkeit aufweisen. Da mehrere Empfänger im System vorhanden sind, muss kein zusätzlicher Synchronisations-Empfänger vorgesehen werden.

Vorzugsweise werden die Trägerphasenmesswerte und die Laufzeiten mittels eines Kalibrierwertes korrigiert, der mit Hilfe eines Referenzsenders mit bekannter Orientierung und Position erzeugt wird.

Erfindungsgemäß weist bei einer Vorrichtung zur Bestimmung der Position und Orientierung eines mobilen Senders dieser Sender mindestens zwei mit einem vorgegebenen Winkel zueinander angeordnete linear polarisierte Antennen auf und die Vorrichtung umfasst mehrere, mindestens drei mit dem mobilen Sender synchronisierbare Empfänger, deren Positionen bekannt sind und die jeweils eine zirkular polarisierte Antenne aufweisen, einen Kalman-Filter, in dem ein feldtheoretisches Modell der Übertragungsstrecken zwischen Sender und Empfängern implementiert ist, mittels dem erwartete Trägerphasenmesswerte bestimmbar sind, und eine Auswerteeinrichtung zum Auswerten der von den Empfängern gelieferten Empfangssignale bezüglich Trägerphasenmesswerte, bzw. Phasendifferenzwinkel und/oder Laufzeiten und weiterhin ist der Kalman-Filter ausgebildet, unter Verwendung des feldtheoretischen Modells und aus den von den Empfängern mit zirkular polarisierter Antenne gelieferten Empfangssignalen und der Auswerteeinrichtung bestimmten Trägerphasenwerten und/oder Laufzeiten die Position und Orientierung des mobilen Senders zu bestimmen. Somit kann mit der erfindungsgemäßen Vorrichtung sowohl die Orientierung als auch die Position des mobilen Senders ohne Positionsfehler auch bei rotierenden Sendern mit einer relativ reduzierten Hardware ermittelt werden.

Besonders bevorzugt wird als Kalman-Filter ein "unscented Kalman-Filter" verwendet, da dieser mit nichtlinearen Messgleichungen umgehen kann. Es ist auch denkbar, dass ein sogenannter "extended Kalman-Filter" verwendet wird, jedoch sind dann zusätzliche mathematische Berechnungen notwendig.

Ausführungsbeispiele der Erfindung sind in der Zeichnung dargestellt und werden in der nachfolgenden Beschreibung näher erläutert. Es zeigen:
- Fig. 1.: eine Prinzipdarstellung eines Teils der erfindungsgemäßen Vorrichtung mit einem Sender und einem Empfänger,
- Fig. 2.: die Darstellung der für das Feldmodell verwendeten Koordinatensysteme und
- Fig. 3.: einen Aufbau der erfindungsgemäßen Vorrichtung als Lokalisierungssystem für einen Ball mit mobilem Sender auf einem Spielfeld mit der erfindungsgemäßen Vorrichtung.

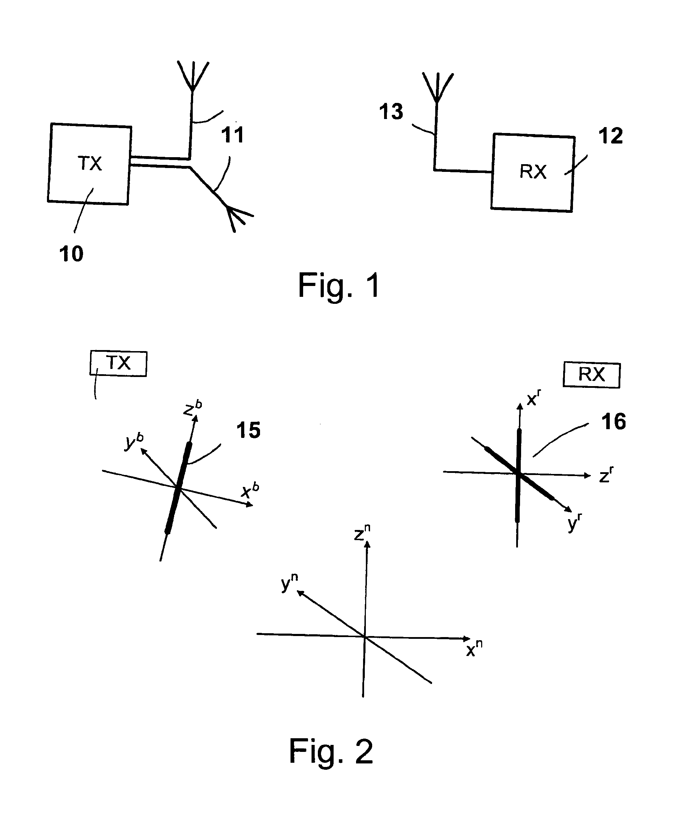

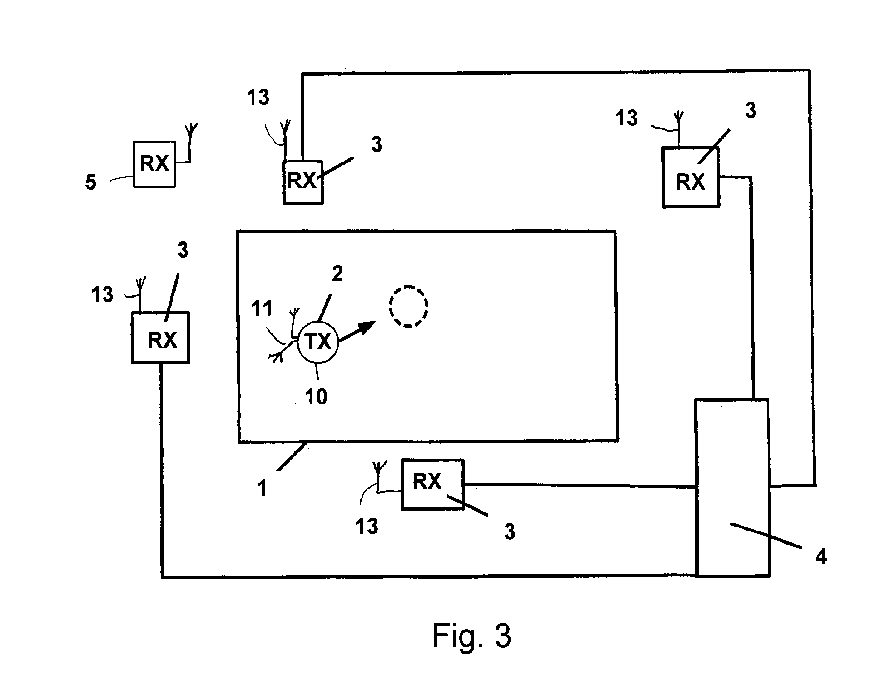

In Fig. 1 ist in Prinzipdarstellung eines mobilen Senders 10 und eines Empfängers 12, wie sie in einem Lokalisierungssystem (Fig. 3) zur Bestimmung der Position und Orientierung des mobilen Senders 10 verwendet werden. Am Sender 10 sind zwei linear polarisierte Antennen 11 angeschlossen, die um einen bekannten Winkel, vorzugsweise 90° zueinander gedreht sind und somit unterschiedlich orientierte Wellenfronten aussenden. Wie ausgeführt, ist der Sender 10 in seiner Lage zu dem feststehenden Empfänger 12 veränderbar, an den eine zirkular polarisierte Antenne 13 angeschlossen ist. Für den Aufbau der erfindungsgemäßen Vorrichtung ist es nicht ausschlaggebend, ob diese rechtshändig oder linkshändig zirkular polarisiert ist, allerdings muss die Drehrichtung des Feldes bekannt sein. Die Sendeantennen 11 haben im Ausführungsbeispiel zum Empfänger 12 die gleiche Distanz, d.h. sie besitzen das gleiche Phasenzentrum, jedoch ist ein gleiches Phasenzentrum der beiden Sendeantennen zur Ausrichtung des erfindungsgemäßen Verfahrens bzw. der Vorrichtung nicht erforderlich.

Der Sender 10 sendet über seine Antennen 11 abwechselnd oder gleichzeitig Sendesignale mit einer vorgegebenen Trägerfrequenz in unterschiedlichen linearen Polarisationsebenen aus. Am Empfänger 12 müssten dann gegebenenfalls bei gleichzeitiger Aussendung von Sendesignalen die empfangenen Signale über ein Multiplexverfahren getrennt werden. Mit dem Empfänger 12 ist eine Auswerteeinrichtung verbunden (s. Fig. 3), die die Empfangssignale entsprechend den Trägerphasenwerten, bzw. Phasenwinkeldifferenzen und Laufzeiten der Sendesignale auswertet, wie weiter unten beschrieben wird. Die Trägerphasenmesswerte besitzen eine Information über Distanz und Orientierung. Genauer gesagt, ist jeder Phasenmesswert zusammengesetzt aus einem Anteil abhängig von der Distanz zwischen Sender 10 und Empfänger 12 und einem zweiten Anteil abhängig von der relativen Orientierung zwischen Sender und Empfänger. Durch die zwei Sendeantennen 11 stehen an dem Empfänger 12 zwei unabhängige Phasenmesswerte zur Verfügung, deren Unterschiede nur von der unterschiedlichen Ausrichtung der Sendeantennen bestimmt wird, da diese beiden im Ausführungsbeispiel die gleiche Distanz zum Empfänger aufweisen. Aus der Sicht des Empfängers 12 kann ein Differenzwinkel zwischen den beiden Sendeantennen 11 erfasst werden, dessen Größe abhängig von der Orientierung des Senders 10 ist, wobei dieser Differenzwinkel über die Differenz der beiden Trägerphasenmesswerte der Empfangssignale messbar ist.

Um diesem Differenzwinkel einer eindeutigen Orientierung zuordnen zu können, weist die erfindungsgemäße Vorrichtung (s. Fig. 3) in ihrer Auswerteeinrichtung 4 ein Kalman-Filter auf, in dem ein feldtheoretisches Modell implementiert ist, das auf dem Aufbau entsprechend Fig. 2 basierend erstellt wird. Das Modell modelliert eine lineare Sendeantenne 15 und eine zirkulare Empfangsantenne 16, die aus zwei gekreuzten Dipolen aufgebaut ist. Die Sendeantenne 15 ist z-gerichtet im so genannten Body-frame (b-frame) dargestellt, während das Koordinatensystem der Empfangsantenne der sogenannte r-frame (Receiver-frame) ist. Diese beiden Koordinatensysteme können gegenüber einem Bezugssystem, das als Navigation-Frame (n-frame) bezeichnet wird, verschoben und gedreht werden.

Für die Bestimmung des Modells werden die Position des Senders 10 bzw. der Sendeantenne 11 und die Ausrichtung des Senders 10 bezüglich des Bezugskoordinatensystems (n-frame) in Form einer Drehmatrix oder Kosinusmatrix oder auch als Quaternion vorausgesetzt. Weiterhin ist Position und Ausrichtung der Empfangsantenne 13 bzw. des Empfängers 12 bekannt, wobei auch hier eine Drehmatrix oder ein Quaternion zur Umrechnung zwischen Bezugskoordinatensystem und Receiver-frame verwendet wird. Zuerst werden die Position der Empfangsantenne 16 aus Sicht der Sendeantenne 15, d.h. dargestellt in b-frame-Koordinaten ermittelt, wobei die erwähnte Drehmatrix oder Quaternion verwendet wird. Außerdem wird das von der Sendeantenne 15 bzw. einer der Sendeantennen 11 erzeugte elektromagnetische Feld in Kugelkoordinaten bestimmt, wobei dies mit Hilfe von Feldgleichungen des Hertz'schen Dipols durchgeführt werden kann. Eine andere Möglichkeit ist, das Feld als "Antennenpattern" real zu messen und in Form einer Tabelle zu hinterlegen, wobei dies den Vorteil hat, dass reale Antennencharakteristika verwendet werden können, die von der idealen Beschreibung abweichen.

Anschließend wird das von der Sendeantenne abgestrahlte Feld an der Position des Empfängers berechnet, wobei die vorher bestimmte Position des Empfängers aus Sicht des Senders bzw. der Sendeantenne und die Feldgleichungen des abgestrahlten elektromagnetischen Feldes verwendet werden. Die vom Sender bzw. von der Sendeantenne erzeugte Feldstärke am Empfänger wird durch komplexwertige Vektoren mathematisch beschrieben, wobei nach:Koordinatentransformation eine vektorielle Felddarstellung bezüglich des Bezugskoordinatensystems (n-frame) erhalten wird. Als Nächstes wird die Ausrichtung der Empfangsantenne berücksichtigt und um aus den beiden Dipolen entsprechend Fig. 2 eine zirkulare polarisierte Antenne darzustellen, wird ein Phasenschieber mit 90° Verschiebung vorgesehen und die Ausrichtung wird mit Hilfe der Drehmatrix ebenfalls in Koordinaten des Bezugskoordinatensystems dargestellt. Aus den Feldstärken an der ausgerichteten Empfangsantenne können nun die induzierten Ströme für jeden Dipol der Empfangsantenne ermittelt und mit dem Phasenschieber in geeigneter Weise zu einem induzierten Strom der zirkularen Empfangsantenne 13 kombiniert werden. Aus der dann vorliegenden komplexen Darstellung des Stroms einer zirkularen Empfangsantenne, welcher von einer linearen Sendeantenne hervorgerufen wird, kann letztendlich der Phasenwinkel extrahiert werden, der dem Messwert für die Trägerphase entspricht. Damit ist nun die gesamte Messgleichung für die Phasenmesswerte in Abhängigkeit von Position und Orientierung einer Sendeantenne beschrieben. Die vorgenannt beschriebene Bestimmung wird für die zweite Sendeantenne in Bezug auf den Empfänger 12 in Fig. 1 wiederholt. Da mehrere Empfänger in der erfindungsgemäßen Vorrichtung vorhanden sind (s. Fig. 3), wird die Bestimmung in gleicher Weise für jeden Empfänger vorgenommen.

Dieses so beschriebene Feldmodell wird nun in einem in der Auswertevorrichtung 4 vorgesehenem Kalman-Filter, das als unscented Kalman-Filter ausgebildet ist, als Messmodell implementiert. Ein Kalman-Filter ist ein Zustandsfilter, d.h., wenn in einem System Zustände erkannt werden können und eine Berechnungsvorschrift vorgegeben ist, wie aus den Zuständen die Messwerte berechnet werden können (Feldmodell), dann kann das Kalman-Filter von den Messwerten wieder auf die Zustände zurückrechnen. Als Zustände werden bei dem System entsprechend Fig. 1 mit dem in der Auswerteeinrichtung 4, d.h. im Kalman-Filter implementierten Feldmodell mindestens die drei Positionskoordinaten des Senders 10 und die vier Zustände des Quaternions, durch die die Orientierung gegeben ist, verwendet. Wenn somit die Empfangssignale an mindestens drei Empfängern gemäß Empfänger 12, die von dem sich bewegenden Sender 10 initiiert werden, hinsichtlich der Trägerphasenmesswerte und gegebenenfalls der Laufzeiten in der Auswerteeinrichtung 4 ausgewertet werden und dem Kalman-Filter als Messgrößen zugeführt werden, so kann dieses die Position des Senders und seine Orientierung zurückrechnen, wobei dies iterativ geschieht, da, ausgehend von einer Startposition, das Kalman-Filter den Zustandssektor derart anzupassen versucht, dass die Differenz zwischen Messung und durch das als Messmodell verwendete Feldmodell vorgegebener Erwartung minimal wird.

Bei den obigen Ausführungen wurde angenommen, dass Sender 10 und Empfänger 12 zueinander synchronisiert sind. Üblicherweise sind jedoch Sender- und Empfängeruhren nicht miteinander verbunden und laufen somit nicht synchron. Daraus resultiert ein Frequenzversatz zwischen Sender und Empfänger und infolge dessen eine Verfälschung der Phasenmesswerte. Um dies zu vermeiden, kann zusätzlich zu der in Fig. 1 dargestellten Anordnung ein weiterer Empfänger vorgesehen sein, dessen Position bekannt ist. Dieser muss natürlich mit dem anderen Empfänger synchronisiert sein. Dieser zweite Empfänger würde gleichfalls das Sendesignal empfangen und durch die Verwendung des TDOA-Verfahrens kann die unbekannte Sendezeit durch Differenzbildung zweier Messwerte eliminiert werden. Ebenfalls kann eine kontinuierliche Schätzung der Urabweichung zwischen Sender und Empfänger vorgenommen werden, wobei dies auch im Kalman-Filter für die Positions- und Orientierungsbestimmung mit integriert bzw. modelliert wird.

Schließlich ist noch eine Kalibrierung notwendig, welche die Phasenmesswerte, die in ihrem Absolutwert verfälscht sind, korrigiert. Dazu kann ein Referenzsender mit bekannter Position und Orientierung vorgesehen werden, dessen Messwerte aus den Empfangssignalen mit den dazugehörigen Erwartungswerten verglichen werden. Die Differenz aus Messung und Erwartung ist der Kalibrierwert, der anschließend bei allen anderen Messungen berücksichtigt wird.

In Fig. 3 ist die erfindungsgemäße Vorrichtung als Lokalisierungssystem vorgesehen, das dazu dient, einen Ball 2 mit Sender 10, der sich auf einem Spielfeld bewegt, kontinuierlich zu verfolgen. Um das Spielfeld herum sind im Ausführungsbeispiel vier Empfänger 3 feststehend angebracht, die dem Empfänger 12 entsprechen und die zeitlich untereinander synchronisiert sind, im Ausführungsbeispiel mit einer gemeinsamen Taktquelle verbunden sind, und die mit der einen oder mehreren Rechnern aufweisenden Auswerteeinrichtung 4 über feste Leitungen, Funk oder sonstige Übertragungsmittel verbunden sind. Selbstverständlich können mehr Empfänger vorgesehen werden, um eine besonders genaue Verfolgung der Position des Objekts 2 zu erzielen. Der Rechner bzw. die Auswerteeinrichtung 4 beinhaltet, wie erwähnt, das Kalman-Filter und die Empfänger 3 weisen die zirkulare polarisierte Antenne auf, während der im Ball 2 vorhandene Sender 10 die zwei um 90° gedrehte linear polarisierte Antennen 11 aufweist. Angedeutet ist hier ein Referenzsender 5 mit fester Position und Orientierung, der für die Kalibrierung herangezogen werden kann. Bei der in Fig. 3 dargestellten Vorrichtung sind alle Empfänger 3 an einen gemeinsamen Takt angeschlossen und laufen daher synchron. Der Sender 10 im Ball 2 besitzt keinen Zugriff auf diesen Takt, es muss somit der dadurch entstehende Messfehler korrigiert werden. Dies geschieht durch Differenzbildung der Messwerte von zwei Empfängern 3, da beide dem gleichen Frequenzversatz unterworfen sind.

Der Sender 10 sendet abwechselnd von einer der beiden Sendeantennen 11 nach dem TDMA Verfahren. Allerdings sind auch andere Multiplexverfahren, wie CDMA, FDMA oder andere denkbar.

Wie erwähnt empfangen alle Empfänger 3 die Sendesignale und die Auswerteeinrichtung ermittelt aus den Empfangssignalen aller Empfänger 3 die jeweiligen Trägerphasenmesswerte und Laufzeiten, die als Eingangsgrößen dem Kalman-Filter zugeführt werden, die als Eingangsgrößen dem Kalman-Filter zugeführt werden, das drei Positionskoordinaten und vier Zustände des Quaternions/der Orientierung ausgibt.

Im Kalman-Filter können noch weitere Parameter, wie Geschwindigkeit, Beschleunigung, Drehrate, Frequenzversatz und weitere Messfehler modelliert werden.

## Patentansprüche

1. Verfahren zur Bestimmung der Position und Orientierung eines mobilen Senders, der mindestens zwei linear polarisierte und mit einem vorgegebenen Winkel zueinander angeordnete Antennen aufweist, wobei mehrere mit dem mobilen Sender synchronisierbare und bezüglich ihrer Position bekannte Empfänger über eine zirkular polarisierte Antenne Sendesignale mit vorgegebener Trägerfrequenz empfangen, mit folgenden Schritten:
Erstellen eines feldtheoretischen Modells der Übertragungsstrecke zwischen mobilem Sender und
Empfängern, das Trägerphasenmesswerte definiert,
Implementieren des feldtheoretischen Modells in einem Kalman-Filter,
Auswerten der Empfangssignale bezüglich Trägerphasenmesswerte und/oder Laufzeiten,
Bestimmen der Position und Orientierung des mobilen Senders in dem Kalman-Filter unter Verwendung des feldtheoretischen Modells und den aus den Empfangssignalen ermittelten Trägerphasenmesswerten und/oder Laufzeiten.

2. Verfahren nach Anspruch 1, **dadurch gekennzeichnet, dass** das feldtheoretische Modell erstellt wird durch:
Bestimmen eines von einer Sendeantenne erzeugten elektromagnetischen Feldes, wobei eine bekannte Position und Orientierung dieser Sendeantenne vorgegeben wird,
Ermitteln der von der Sendeantenne erzeugten Feldstärke in vektorieller Felddarstellung an dem jeweiligen Empfänger mit bekannter Position,
Bestimmen der in der zirkularen Antenne des jeweiligen Empfängers und induzierten komplexen Ströme unter Verwendung der Komponenten der Feldstärke in vektorieller Felddarstellung, wobei die zirkulare Antenne mittels zweier linearer Dipole modelliert wird,
Ermitteln des Phasenwinkels aus den Strömen als Trägerphasenmesswert.

3. Verfahren nach Anspruch 2, **dadurch gekennzeichnet, dass** bei der Bestimmung der induzierten Ströme mittels des Modells der zirkularen Antenne aus zwei linearen Dipolen eine 90°-Verschiebung eines Phasenschiebers berücksichtigt wird.

4. Verfahren nach Anspruch 2 oder Anspruch 3, **dadurch gekennzeichnet, dass** das von einer Sendeantenne erzeugte elektromagnetische Feld unter Verwendung der Feldgleichungen eines Hertz'schen Dipols oder durch real gemessene Werte der Feldstärkeverteilung der Sendeantenne auf einer Kugel, die in einer Tabelle hinterlegt werden, bestimmt wird.

5. Verfahren nach einem der Ansprüche 1 bis 4, **dadurch gekennzeichnet, dass** zur Umrechnung eines Senderkoordinatensystems und eines Empfängerkoordinatensystems auf ein Bezugskoordinatensystem Drehmatrizen in Form von Kosinusmatrizen oder Quaternionen verwendet werden.

6. Verfahren nach einem der Ansprüche 1 bis 5, **dadurch gekennzeichnet, dass** das feldtheoretische Modell für jede Sendeantenne in Bezug auf jeden Empfänger erstellt wird.

7. Verfahren nach einem der Ansprüche 1 bis 6, **dadurch gekennzeichnet, dass** Sender und Empfänger durch Verwendung des TDOA-Verfahrens mittels eines zusätzlichen Synchronisations-Empfängers bekannter Position und/oder durch kontinuierliche Schätzung der Abweichungen der im Sender und Empfänger vorhandenen Uhren synchronisiert werden.

8. Verfahren nach einem der Ansprüche 1 bis 7, **dadurch gekennzeichnet, dass** die Phasenmesswerte und/oder Laufzeiten mittels eines Kalibrierwertes korrigiert werden, der unter Verwendung eines Referenzsenders mit bekannter Orientierung und Position erzeugt wird.

9. Vorrichtung zum Bestimmen der Position und Orientierung eines mobilen Senders, der mindestens zwei linear polarisierte und mit einem vorgegebenen Winkel zueinander angeordnete Antennen aufweist, mit mehreren mit dem mobilen Sender synchronisierbaren Empfängern, deren Position bekannt ist und die jeweils eine zirkular polarisierte Antenne aufweist,
einem Kalman-Filter, in dem ein feldtheoretisches Modell der Übertragungsstrecke zwischen mobilem Sender und Empfängern, mittels dem Phasenmesswerte bestimmbar sind, implementiert ist, einer Auswerteeinrichtung zum Auswerten der von den Empfängern gelieferten Empfangssignale bezüglich Trägerphasenmesswerte und/oder Laufzeiten,
wobei der Kalman-Filter ausgebildet ist, unter Verwendung des feldtheoretischen Modells der Übertragungsstrecke und aus den von der Auswerteeinrichtung gelieferten Phasenmesswerten und/oder Laufzeiten die Position und Orientierung des mobilen Senders zu bestimmen.

10. Vorrichtung nach Anspruch 9, **dadurch gekennzeichnet, dass** das Kalman-Filter ein unscented Kalman-Filter ist.

11. Vorrichtung nach Anspruch 9 oder 10, **dadurch gekennzeichnet, dass** mindestens drei, vorzugsweise phasenstarr miteinander verbundene Empfänger zur Bildung eines Lokalisierungssystems des beweglichen Senders vorgesehen sind.
